**Europäisches Patentamt**

**European Patent Office**

**Office européen des brevets**

(19)

(11) Veröffentlichungsnummer: **0 266 712**
**B1**

(12) **EUROPÄISCHE PATENTSCHRIFT**

(45) Veröffentlichungstag der Patentschrift:
27.06.90

(51) Int. Cl.⁵: **F16D 23/04**, F16D 69/02

(21) Anmeldenummer: **87116040.4**

(22) Anmeldetag: **31.10.87**

(54) **Verfahren und Vorrichtung zum Herstellen von reibschlüssigen Elementen, insbesondere von Synchronisierungskörpern in Stufengetrieben von Kraftfahrzeugen.**

(30) Priorität: **03.11.86 DE 3637385**

(43) Veröffentlichungstag der Anmeldung:
**11.05.88 Patentblatt 88/19**

(45) Bekanntmachung des Hinweises auf die Patenterteilung:
**27.06.90 Patentblatt 90/26**

(84) Benannte Vertragsstaaten:
**DE ES FR GB IT SE**

(56) Entgegenhaltungen:
**DE-C- 3 417 813**
**FR-A- 1 570 493**
**GB-A- 530 904**
**US-A- 2 784 105**
**US-A- 3 087 814**

(73) Patentinhaber: **MÜLLER, Erich Richard, Hohe Strasse 15, D-7110 Öhringen-Cappel(DE)**

(72) Erfinder: **MÜLLER, Erich Richard, Hohe Strasse 15, D-7110 Öhringen-Cappel(DE)**

(74) Vertreter: **Lorenz, Werner, Dipl.-Ing., Fasanenstrasse 7, D-7920 Heidenheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren und eine Vorrichtung zum Herstellen von reibschlüssigen Elementen, insbesondere von Synchronisierungskörpern in Stufengetrieben von Kraftfahrzeugen, bei dem ein Sinter-Reibbelag auf eine Fläche des Elements aufgebracht wird und unter Druckeinwirkung auf ein vorbestimmtes Sollmaß verdichtet wird.

Bei bekannten Verfahren (siehe z.B. DE-C 3 417 813) wird ein körniges, sinterbares Reibmaterial auf ein ebenes Trägerblech aufgestreut und mit dem Trägerblech in einem Ofen gesintert. Das ebene Trägerblech wird alsdann durch ein- oder mehrmaliges Pressen verdichtet.

Nach dem Sintern und Verdichten wird das Trägerblech in geeignete Zuschnitte zerschnitten, und die Zuschnitte werden durch Tiefziehen in die gewünschte Form des Reibbelages gebracht. Insbesondere kann diese Form eine wellenartige Form um eine Kegelfläche herum sein. Der so geformte Reibkörper wird alsdann in Anlage an einen metallischen Grundkörper des reibschlüssigen Elementes, beispielsweise eine kegelförmige Bohrung eines Synchronrings, gebracht und dort z.B. durch Anschweißen befestigt. Bei der genannten wellenförmigen Gestalt kann der Reibkörper im Bereich der Wellenbäuche punktweise angeschweißt werden, die an die innenkegelförmige Fläche des reibschlüssigen Elementes angrenzen.

Derartige Verfahren haben jedoch den Nachteil, daß nach dem Sintern ein getrennter Arbeitsvorgang zum Verdichten (sogenanntes Kalibrieren) des Reibbelags erforderlich ist. Außerdem können sich durch die nachfolgende Bearbeitung, insbesondere Verformung des aus Trägerblech und Reibbelag bestehenden Reibkörpers, noch Maßabweichungen ergeben, so daß eine gewisse Toleranz in den Endmaßen des reibschlüssigen Elements in Kauf genommen werden muß.

In der FR-A 1 570 493, von der bei der vorliegenden Erfindung ausgegangen worden ist, ist bereits vorgeschlagen worden den Sinter-Reibbelag nach dem Aufbringen auf das Element auf ein vorbestimmtes Sollmaß zu verdichten. Die Verdichtung erfolgt jedoch dabei an ebenen Elementen, was bedeutet, daß weitere Arbeitsabläufe notwendig sind, wenn ein Reibbelag in einer anderen Form, z.B. in einer Kegelform für Synchronisierkörper, gewünscht wird. In einem derartigen Falle mußten auch bei diesem Verfahren nachfolgende Verformungen vorgenommen werden, wobei ebenfalls die Gefahr von Maßabweichungen gegeben war.

Der Erfindung liegt demgegenüber die Aufgabe zugrunde, ein Verfahren und eine Vorrichtung der eingangs genannten Art dahingehend weiterzubilden, daß der Arbeitsablauf vereinfacht wird und insbesondere toleranzarme Erzeugnisse hergestellt werden.

Diese Aufgabe wird nach dem eingangs genannten Verfahren dadurch gelöst, daß bei einer kegelförmigen Oberfläche des Sinter-Reibbelags der Druck mittels axialen Einführens eines mindestens abschnittsweise kegelförmigen Werkzeugs mit gleichem Steigungswinkel wie die Oberfläche des Sinter-Reibbelages erzeugt wird.

Die Erfindung löst damit die zugrundeliegende Aufgabe vollkommen, weil durch die Kalibrierung des Sinter-Reibbelags am fertigen Element, beispielsweise Synchronring, gesonderte Arbeitsschritte des Kalibrierens und des Einteilens in unterschiedliche Gruppen von Abmessungen, je nach Toleranzen der Ausgangselemente, vermieden wird. Der Reibbelag liegt direkt und ohne Zwischenlage eines Trägerblechs oder einer Folie auf dem Ausgangselement, wobei auch bei Ausgangselementen mit unterschiedlichen Fertigungstoleranzen das Kalibrieren des Sinter-Reibbelags am Element so vorgenommen werden kann, daß ein einheitliches Endmaß, unabhängig von möglichen Fertigungstoleranzen der Ausgangselemente, gewährleistet ist.

Da eine Halterung zum Einbringen des Reibkörpers in den metallischen Grundkörper des reibschlüssigen Elementes ohnehin erforderlich ist, kann diese Vorrichtung auch dazu verwendet werden, den Reibbelag in der gewünschten Weise zu verdichten. Es entfällt daher im Herstellungsverfahren ein gesonderter Schritt, nämlich der des Verdichtens (Kalibrierens) nach dem Sintern mittels hierzu separat vorzusehender Verdichtungsvorrichtungen. Darüber hinaus hat die Verdichtung des Reibbelags im montierten Zustand am reibschlüssigen Element den Vorteil, daß reproduzierbarere Ergebnisse erzielt werden, weil der Reibkörper nach dem Verdichten nicht mehr gehandhabt, insbesondere nicht mehr verbogen werden muß.

Erfindungsgemäß wird bevorzugt eine Vorrichtung eingesetzt, bei der das Element mit einem Sinter-Reibbelag mit innenkegelförmiger Oberfläche versehen ist, das Werkzeug weist mindestens abschnittsweise einen Außenkegel gleichen Steigungswinkels auf, und das Element und das Werkzeug sind axial gegeneinander verschiebbar und unter Druck aneinander anpreßbar.

Diese Maßnahmen haben den Vorteil, daß besonders einfache Werkzeuge verwendet werden können, im Prinzip können sogar die seither verwendeten Werkzeuge eingesetzt werden, wie sie ohnehin zum Einbringen und Haltern des Reibkörpers im metallischen Grundkörper des reibschlüssigen Elements erforderlich waren, um den Reibkörper dort zu befestigen und zu halten, während dieser beispielsweise eingeschweißt wurde.

Bei einer zweiten Ausführungsform des erfindungsgemäßen Verfahrens wird bei einer innenkegelförmigen Oberfläche der Druck mittels radialen Spreizens eines mindestens abschnittsweise außenkegelförmigen, an die innenkegelförmige Oberfläche angelegten Werkzeugs erzeugt.

Hierzu wird bevorzugt eine Vorrichtung verwendet, bei der das Element mit einem Sinter-Reibbelag mit innenkegelförmiger Oberfläche versehen ist und das Werkzeug mindestens abschnittsweise einen Außenkegel gleichen Steigungswinkels aufweist, wobei das Werkzeug im Bereich des Außenkegels mit Spannbacken versehen ist und das Werkzeug mit seinem Außenkegel satt an der innenkegelförmigen Oberfläche anliegt und ferner Spreizmittel zum radialen Ausweiten der Spannbacken vorgesehen sind.

Diese Maßnahme hat den Vorteil, daß, verglichen mit dem zuvor erläuterten axialen Einführen eines Preßkegels, rein radial gerichtete Kräfte ausgeübt werden, so daß keine Scherbelastung am Reibbelag auftritt.

Bei einer alternativen Ausführungsform einer erfindungsgemäßen Vorrichtung, bei der das Element ebenfalls mit einem Sinter-Reibbelag mit innenkegelförmiger Oberfläche versehen ist und das Werkzeug mindestens abschnittsweise einen Außenkegel gleichen Steigungswinkels aufweist, ist das Werkzeug im Bereich des Außenkegels mit Rollen versehen, die bei Rotation des Werkzeugs einen mit der innenkegelförmigen Oberfläche identischen Außenkegel beschreiben, und es sind Spreizmittel zum radialen Anpressen der Rollen an die Oberfläche vorgesehen.

Diese Maßnahme hat den Vorteil, daß durch ein derartiges Rollierwerkzeug auch hohe Kalibrierkräfte aufgebracht werden können, ohne daß eine bleibende Verformung des Elements, beispielsweise eine Dehnung eines Synchronrings, befürchtet werden muß. Es wird nämlich auf diese Weise die Anpreßkraft auf beispielsweise drei Rollen über den Umfang eines Synchronrings verteilt, wobei die Anpreßkraft vorzugsweise entweder durch einen axial verschiebbaren Innenkegel oder durch einen geeignet angebrachten Hydraulikkolben fein einstellbar ist. Es entfällt ferner bei dieser Variante der Erfindung eine bei vollflächigem Kalibrieren möglicherweise erforderliche formschlüssige Halterung des Elements, die bei hohen Anpreßkräften deswegen notwendig werden kann, um die genannten bleibenden Verformungen zu verhindern.

Bei einer dritten Variante des erfindungsgemäßen Verfahrens wird bei einer innenkegelförmigen Oberfläche der Druck mittels radialen Dehnens eines mindestens abschnittsweise außenkegelförmigen und radial verformbaren Werkzeugs erzeugt.

Bevorzugt wird hierzu eine Vorrichtung verwendet, bei der das Element mit einem Sinter-Reibbelag mit innenkegelförmiger Oberfläche versehen ist und das Werkzeug mindestens abschnittsweise einen Außenkegel gleichen Steigungswinkels aufweist, ferner das Werkzeug im Bereich des Außenkegels mit verformbaren, einen Hohlraum begrenzenden Wänden versehen ist und das Werkzeug mit seinem Außenkegel satt an der innenkegelförmigen Oberfläche anliegt, wobei schließlich noch Mittel zur Einstellung eines Drucks im Hohlraum vorgesehen sind.

Auch bei diesem Ausführungsbeispiel der Erfindung ergibt sich der Vorteil, daß rein radiale Verdichtungskräfte ausgeübt werden, und es kann der Verdichtungsdruck besonders feinfühlig durch Dosieren des Drucks, beispielsweise mittels einer hydraulischen Einrichtung, eingestellt werden.

Bei einer vierten Variante des erfindungsgemäßen Verfahrens wird bei einer außenkegelförmigen Oberfläche der Druck mittels axialen Aufsetzens eines mindestens abschnittsweise innenkegelförmigen Werkzeugs erzeugt.

Auch hierzu kann bevorzugt eine Vorrichtung eingesetzt werden, bei der das Element mit einem Sinter-Reibbelag mit außenkegelförmiger Oberfläche versehen ist und das Werkzeug mindestens abschnittsweise einen Innenkegel gleichen Steigungswinkels aufweist, wobei das Element und das Werkzeug axial gegeneinander verschiebbar und unter Druck aneinander anpreßbar sind.

Weitere Vorteile ergeben sich aus der Beschreibung und der beigefügten Zeichnung. Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.

Es zeigen:

Figur 1: eine Darstellung, im Schnitt, eines Ausführungsbeispiels eines erfindungsgemäß hergestellten reibschlüssigen Elements in Gestalt eines Synchronrings;

Figur 2: in stark vergrößertem Maßstab eine schematische Darstellung zur Erläuterung des Verdichtens eines Reibbelags;

Fig. 3 ein erstes Ausführungsbeispiel einer erfindungsgemäßen Vorrichtung zur Durchführung eines ersten Ausführungsbeispiels eines erfindungsgemäßen Verfahrens;

Fig. 4 eine Darstellung ähnlich Fig. 3, zur Erläuterung einer zweiten Variante von erfindungsgemäßen Ausführungsbeispielen;

Fig. 5 eine weitere Darstellung ähnlich Fig. 3 zur Erläuterung einer dritten Variante von erfindungsgemäßen Ausführungsbeispielen;

Fig. 6 eine weitere Darstellung ähnlich Fig. 3 zur Erläuterung einer vierten Variante von erfindungsgemäßen Ausführungsbeispielen.

Fig. 7 eine weitere Darstellung ähnlich Fig. 3 zur Erläuterung einer fünften Variante von erfindungsgemäßen Ausführungsbeispielen;

Fig. 8 eine Darstellung, teilweise im Schnitt, zur Erläuterung einer sechsten Variante von erfindungsgemäßen Ausführungsbeispielen.

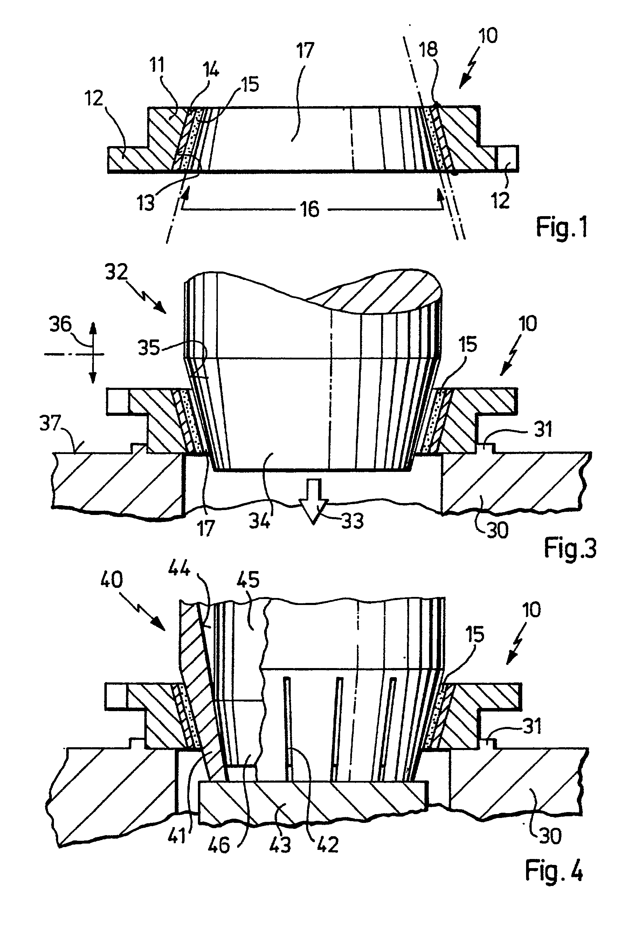

In Fig. 1 ist mit 10 ein Synchronring bezeichnet, der im Rahmen der nachstehenden Beschreibung als Beispiel eines reibschlüssigen Elementes dienen soll. Es versteht sich jedoch, daß anstelle eines Synchronrings auch Gleichlaufringe, Kupplungskörper oder andere derartige reibschlüssige Elemente verwendet werden können und die Beschränkung in der Darstellung nur aus Gründen der Übersichtlichkeit gewählt wurde.

Der Synchronring 10 besteht aus einem Metallkörper 11, der an seinem Außenumfang mit einer Verzahnung 12 versehen ist. Auf eine innenkegelförmige Innenfläche 13 des Metallkörpers 11 ist ein Reibkörper aufgebracht, der aus einem Trägerblech 14 und einem darauf aufgebrachten Reibbelag 15 besteht.

Der Reibkörper wird dadurch hergestellt, daß zunächst auf ein ebenes, großflächiges Trägerblech ein sinterbares körniges Reibmaterial aufgestreut und dieser Verbund dann gesintert wird. Anschließend an das Sintern wird das flächige Trägerblech in geeignete Zuschnitte zerteilt, und diese Zuschnitte werden durch Tiefziehen o. dgl. in die gewünschte Form, beispielsweise in die in Fig. 1 dargestellte Hohlkegelstumpfform, gebracht und dort befestigt, beispielsweise angeschweißt, wie mit einer Schweißnaht 18 in Fig. 1 angedeutet.

Um den Synchronring 10 zuverlässig einsetzbar zu machen, muß ein Innenkegelmaß, das in Fig. 1 mit 16 angedeutet ist, eingehalten werden, das die Öffnung 17 des Synchronrings 10 definiert. Das Innenkegelmaß 16 muß hinsichtlich Steigungswinkel und Durchmesser mit einem Sollmaß innerhalb einer möglichst geringen Toleranz übereinstimmen.

Bei bekannten Verfahren wurde der aus Trägerblech 14 und Reibbelag 15 bestehende Reibkörper im noch ebenen, unzerschnittenen Zustand durch Druckeinwirkung verdichtet, und der verdichtete Reibkörper wurde verformt und in den Metallkörper 11 eingesetzt.

Fig. 2 zeigt in der linken Hälfte einen Reibbelag 15a, wie er nach dem Sintern vorliegt. Körner 10 des Reibmaterials liegen relativ lose beieinander und haben untereinander relativ große Zwischenräume 21a. Hierdurch ist ein Rohmaß 22 der Dicke des Reibbelags 15a bzw. des Reibbelags 15a und des Trägerblechs 14 gegeben.

Bringt man nun, wie in der rechten Hälfte von Fig. 2 dargestellt, einen Druck 23 auf die Oberfläche des Reibbelags 15b auf, so werden die Körner 20 verdichtet und insbesondere die Zwischenräume 21a verkleinert. Es ergibt sich somit ein gegenüber dem Rohmaß 22 vermindertes Sollmaß 24, das in gewissen Bereichen durch Variation des Drucks 22 eingestellt werden kann. Dabei macht man sich die Tatsache zunutze, daß der Reibbelag 15a nach dem Sintern ein relativ duktiles Gefüge hat, d.h. ohne Schaden zu nehmen innerhalb gewisser Grenzen verdichtet werden kann.

Fig. 3 zeigt in schematischer Darstellung eine erste Vorrichtung, wie sie im Rahmen der vorliegenden Erfindung verwendet werden kann.

Auf einem Werkstückhalter 30 mit einem Zentrieranschlag 31 ist der Synchronring 10 mit sich nach oben öffnender Öffnung 17 angeordnet. Der Zentrieranschlag 31 umgreift den Synchronring 10 vorzugsweise formschlüssig, um verbleibende Verformungen bei hohen Verdichtungskräften zu verhindern.

Ein Werkzeug 32 ist in Richtung eines Pfeils 33 nach unten relativ zum Werkstückhalter 30 verschiebbar. Das Werkzeug 32 ist an seiner Unterseite mit einem Außenkegel 34 versehen, dessen Steigungswinkel mit dem Steigungswinkel des Innenkegels des Synchronrings 10 an der Oberfläche des Reibbelags 15 übereinstimmt.

Wird das Werkzeug 32 aus der in Fig. 3 vom Synchronring 10 beabstandeten Position in Richtung des Pfeils 33 nach unten bewegt, gelangt eine Kegelfläche 35 des großen Kegels 34 in Anlage an die Oberfläche des Reibbelags 15. Durch Einstellen der Höhenposition 36 relativ zur Auflagefläche 37 des Werkstückhalters 30 kann nun der Reibbelag 15 mit hoher Präzision auf das Sollmaß 24 von Fig. 2 verdichtet werden. Das in Fig. 1 eingetragene Kegelmaß 16 kann somit mit äußerst geringer Toleranz am fertigen Synchronring 10 eingestellt werden.

Bei dem in Fig. 4 gezeigten zweiten Ausführungsbeispiel ist der Synchronring 10, so wie bereits zu Fig. 3 erläutert, eingespannt. Ein Werkzeug 40 ist an seinem unteren, kegelförmigen Ende mit Spannbacken 41 versehen, die voneinander durch axiale Schlitze 42 getrennt sind. Im Gegensatz zum Ausführungsbeispiel nach Fig. 3 ist das Werkzeug 40 nach Fig. 4 axial fest positioniert, und zwar ruht es mit seiner unteren Stirnfläche auf einem raumfesten Anschlag 43 derart, daß die Oberflächen der Spannbacken 41 satt an der Oberfläche des Reibbelags 15 anliegen.

Das Werkzeug 40 ist mit einer axialen Innenbohrung versehen, die unten in einen Innenkegel 44 ausläuft. Mittels eines axial bewegbaren Spreizstabes 45, der an seinem unteren Ende mit einem Außenkegel 46 passend zum Innenkegel 44 versehen ist, können nun die Spannbacken 41 radial nach außen gedrückt werden, wodurch der Reibbelag 15 unter Einwirkung rein radialer Kräfte, d.h. ohne jegliche Scherbelastung, wie sie beim Ausführungsbeispiel gemäß Fig. 3 noch auftreten kann, verdichtet wird.

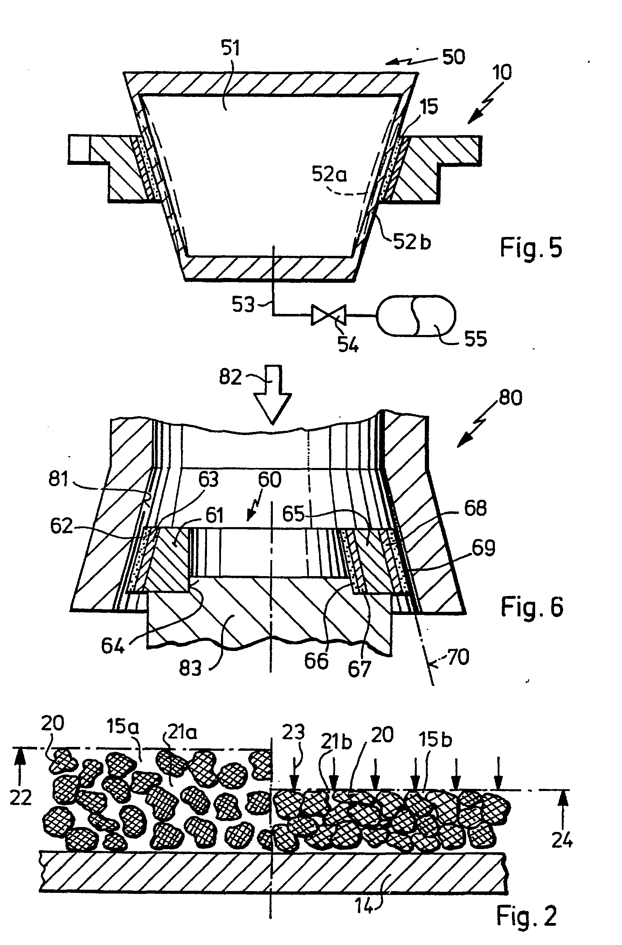

Bei einem dritten Ausführungsbeispiel, wie es in Fig. 5 dargestellt ist, ist der Synchronring 10 wiederum in der bereits beschriebenen Weise gelagert. Ein Werkzeug 50 liegt, wie dies bereits zu Fig. 4 beschrieben wurde, axial fest am Reibbelag 15 mit einer außenkegelförmigen Oberfläche an.

Das Werkzeug 50 ist mit einem Hohlraum 51 versehen, und die im wesentlichen außenkegelförmig verlaufenden Seitenwände 52 sind durch Einstellen des Drucks im Hohlraum 51 verformbar. Bei niedrigem Druck bzw. im drucklosen Zustand des Hohlraums 51 sind die Seitenwände, wie mit 52a gestrichelt angedeutet, leicht nach innen eingezogen. Wird nun im Hohlraum 51 der Druck erhöht, verformen sich die Seitenwände nach außen, bis sie die durchgezogen eingezeichnete mit 52b bezeichnete Endstellung erreicht haben, in der der Reibbelag 15 gerade auf das Sollmaß verdichtet wurde.

Zum Erzeugen von Druck im Hohlraum 51 kann über eine Leitung 53 und ein Ventil 54 ein Druck, beispielsweise ein hydraulischer oder ein pneumatischer Druck aus einem Druckreservoir 55 zugeführt werden.

Ein viertes Ausführungsbeispiel der Erfindung zeigt Fig. 6, bei dem ein Synchronring 60 mit außenkegelförmiger Oberfläche 70 bearbeitet wird.

Die linke Hälfte von Fig. 6 zeigt eine Variante, bei der der Synchronring 60 einen Metallkörper 61 aufweist, der an seiner außenkegelförmigen Oberfläche mit einem Reibkörper, bestehend aus einem Reibbelag 62 und einem Trägerblech 63 versehen ist. Eine Innenfläche 64 des Metallkörpers 61 ist axial zylindrisch ausgebildet.

Demgegenüber zeigt die rechte Hälfte von Fig. 6 eine andere Variante, bei der ein Metallkörper 65 des Synchronrings 10 sowohl innen wie auch außen kegelig ausgebildet und mit Reibkörpern versehen ist. Der innere Reibkörper besteht wiederum aus Reibbelag 66 und Trägerblech 67, während der äußere Reibkörper aus einem Trägerblech 68 und einem Reibbelag 69 besteht.

Ein Werkzeug 80 ist mit einer Innenbohrung versehen und mit seinem unteren Ende nach außen aufgeweitet, so daß ein Innenkegel 81 gebildet wird, dessen Steigungswinkel mit dem Außenkegel des Synchronrings 60 übereinstimmt. Wird das Werkzeug 80 in Richtung eines Pfeils 82 nach unten verschoben, so wird der Reibbelag 62 bzw. 69 des auf einen Werkstückhalter 83 zentriert aufgespannten Synchronrings 60 verdichtet, wie dies sinngemäß bereits zu Fig. 3 erläutert wurde.

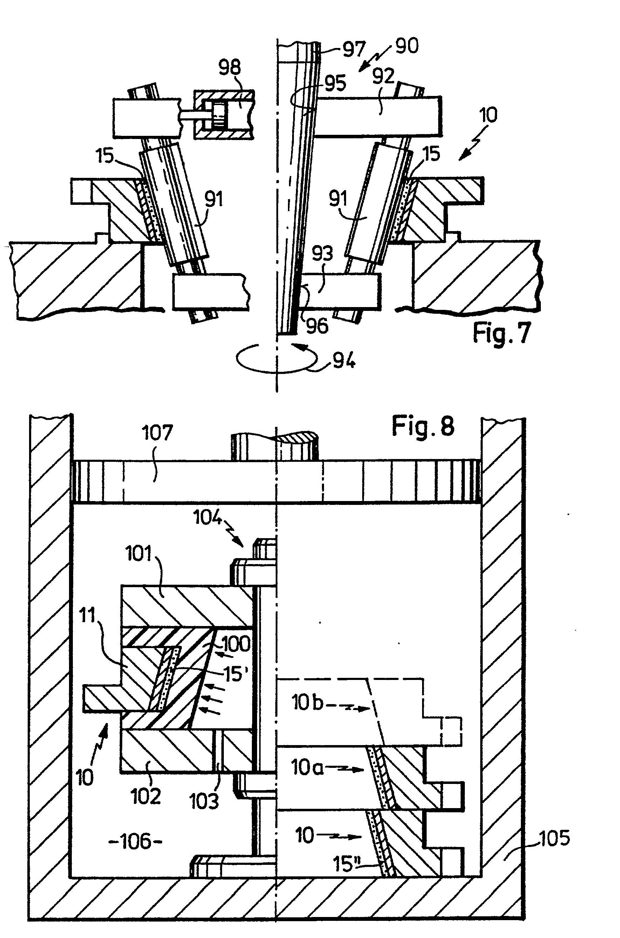

In Fig. 7 ist ein weiteres Ausführungsbeispiel der Erfindung dargestellt, bei dem zum Verdichten des Reibbelags 15 ein Rollierwerkzeug 90 verwendet wird.

Das Rollierwerkzeug 90 weist feste oder drehbare Rollen 91 auf, die mit einer besonders harten Oberfläche, beispielsweise einer Diamantoberfläche o. dgl., versehen sind. Die Rollen 91 sind an ihren Enden in Rahmen 92, 93 gelagert, wobei die Rahmen 92, 93 gemeinsam um die Hochachse des Synchronrings 10 in Richtung eines Pfeils 94 drehbar sind. Der Anstellwinkel der Rollen 91 ist dabei so bemessen, daß die Oberflächen der Rollen 91 bei Rotation des Rollierwerkzeugs 90 in Richtung des Pfeils 94 gerade einen Außenkegel beschreiben, der identisch mit der innenkegelförmigen Oberfläche des Reibbelags 15 ist.

Obwohl auch das Rollierwerkzeug 90 axial in den Synchronring eingeführt werden kann, wie dies prinzipiell anhand von Fig. 3 erläutert wurde, ist eine Ausführungsform besonders bevorzugt, bei der die Rahmen 92, 93 radial gespreizt werden. Hierzu können die Rahmen 92, 93 mit innenkegelförmigen Oberflächen 95 versehen sein, in die eine außenkegelförmige Oberfläche 96 eines Spreizkegels 97 greift, der bei axialer Verschiebung die Rollen 91 im wesentlichen in radialer Richtung an den Reibbelag 15 anpreßt.

Alternativ hierzu kann zwecks radialer Spreizung der Rahmen 92, 93 auch eine hydraulische Vorrichtung vorgesehen werden, beispielsweise die in der linken Hälfte von Fig. 7 nur äußerst schematisch angedeutete Kolben-Zylinder-Einheit 98.

Fig. 8 zeigt schleißlich noch weitere Ausführungsbeispiele der Erfindung, bei denen der Synchronring 10 unmittelbar einem Fluiddruck ausgesetzt wird.

In der linken Hälfte von Fig. 8 ist der Fall betrachtet, bei dem der Reibbelag 15' eine offenporige Struktur aufweist. Um diese offenporige Struktur zu versiegeln, ist der Reibbelag 15' mit einem elastischen Dichtkörper 100 umgeben, der beispielsweise auch den Metallkörper 11 noch teilweise umgreift.

Der elastische Dichtkörper 100 wird in axialer Richtung beidseitig von Druckplatten 101, 102 gehalten, von denen mindestens eine mit einer Ausgleichsbohrung 103 versehen ist. Die Druckplatten 101, 102 sind ihrerseits wieder an einem Stativ 104 befestigt, wobei z.B. die Druckplatten 101, 102 gegeneinander verschraubt sein können.

Das Stativ 104 befindet sich in einem Druckbehälter 105, dessen Innenraum 106 mittels eines schematisch angedeuteten Kolbens 107 mit einem in weiten Bereichen einstellbaren Druck beaufschlagt werden kann. Zweckmäßigerweise wird der Innenraum 106 hierzu mit einem geeigneten Fluid, beispielsweise einem Drucköl, befüllt, es kann jedoch auch die im Innenraum 106 vorhandene Luft mittels des Kolbens 107 komprimiert werden, sofern dies im Einzelfall ausreichend sein sollte. Der Druck wird in einem Bereich zwischen 150 und 600 bar, vorzugsweise zwischen 230 und 460 bar, eingestellt.

Wegen der Ausgleichsbohrung 103 verteilt sich der Druck gleichermaßen im Innenraum 106 und komprimiert den elastischen Dichtkörper 100, wie mit Pfeilen angedeutet, gegen den offenporigen Reibbelag 15', so daß dieser gleichmäßig verdichtet wird.

In der rechten Hälfte von Fig. 8 ist der Fall berücksichtigt, daß der Reibbelag 15" geschlossenporig ausgebildet ist, so daß eine separate Versiegelung entfällt. In diesem Falle kann man den Synchronring 10 mit Reibbelag 15" unmittelbar dem Fluiddruck aussetzen, und die in der linken Hälfte von Fig. 8 gezeichneten Vorrichtungselemente sind nicht förderlich. Man kann in diesem Falle auch mehrere Synchronringe lose aufeinander stapeln, wie mit 10, 10a, 10b in Fig. 8 angedeutet.

Beim Ausführungsbeispiel gemäß Fig. 6 wurde ein außenkegelförmiges Werkstück mit einem Innenkegel-Werkzeug bearbeitet, das analog dem Außenkegelwerkzeug von Fig. 3 ausgebildet war. Es versteht sich jedoch, daß zur Bearbeitung eines Außenkegels auch Innenkegel-Werkzeuge verwendet werden können, die analog zu den Außenkegel-Werkzeugen der Fig. 4, 5, 7 und 8 ausgebildet sind.

**Patentansprüche**

1. Verfahren zum Herstellen von reibschlüssigen Elementen, insbesondere von Synchronisierungskörpern (10, 60) in Stufengetrieben von Kraftfahrzeugen, bei dem ein Sinter-Reibbelag (15; 62, 66, 69) auf eine Fläche (13) des Elementes aufgebracht wird und unter Druckeinwirkung (23) auf ein vorbestimmtes Sollmaß (24) verdichtet wird, dadurch gekennzeichnet, daß bei einer kegelförmigen Oberfläche des Sinter-Reibbelags (15; 62, 66, 69) der Druck mittels axialen Einführens eines mindestens abschnittsweise kegelförmigen Werkzeugs (32, 40, 50, 80, 90) mit gleichem Steigungswinkel wie die Oberfläche des Sinter-Reibbelages (15, 62, 66, 69) erzeugt wird.

2. Verfahren nach Anspruch 1, dadurch gekennzeichnet, daß bei einer innenkegelförmigen Oberfläche des Sinter-Reibbelags (15; 66) der Druck mittels radialen Spreizens eines mindestens abschnittsweise außenkegelförmigen, an die innenkegelförmige Oberfläche angelegten Werkzeugs (40) erzeugt wird.

3. Verfahren nach Anspruch 1, dadurch gekennzeichnet, daß bei einer innenkegelförmigen Oberfläche des Sinter-Reibbelags (15; 66) der Druck mittels radialen Dehnens eines mindestens abschnittsweise außenkegelförmigen und radial verformbaren Werkzeugs (50) erzeugt wird.

4. Verfahren nach Anspruch 1, dadurch gekennzeichnet, daß bei einer außenkegelförmigen Oberfläche (70) des Sinter-Reibbelags (69) der Druck mittels axialen Aufsetzens eines mindestens abschnittsweise innenkegelförmigen Werkzeugs (80) erzeugt wird.

5. Vorrichtung zur Durchführung des Verfahrens nach Anspruch 1, dadurch gekennzeichnet, daß das Element mit einem Sinter-Reibbelag (15; 66) mit innenkegelförmiger Oberfläche versehen ist, daß das Werkzeug (32) mindestens abschnittsweise einen Außenkegel (34) gleichen Steigungswinkels aufweist und daß das Element und das Werkzeug (32) axial gegeneinander verschiebbar und unter Druck aneinander anpreßbar sind.

6. Vorrichtung zur Durchführung des Verfahrens nach Anspruch 2, dadurch gekennzeichnet, daß das Element mit einem Sinter-Reibbelag (15; 66) mit innenkegelförmiger Oberfläche versehen ist, daß das Werkzeug (40) mindestens abschnittsweise einen Außenkegel gleichen Steigungswinkels aufweist, daß das Werkzeug (40) im Bereich des Außenkegels mit Spannbacken (41) versehen ist, daß das Werkzeug (40) mit seinem Außenkegel satt an der innenkegelförmigen Oberfläche anliegt und daß Spreizmittel (45) zum radialen Ausweiten der Spannbacken (41) vorgesehen sind.

7. Vorrichtung zur Durchführung des Verfahrens nach Anspruch 2, dadurch gekennzeichnet, daß das Element mit einem Sinter-Reibbelag (15; 66) mit innenkegelförmiger Oberfläche versehen ist, daß das Werkzeug (90) mindestens abschnittsweise einen Außenkegel gleichen Steigungswinkels beschreibt, daß das Werkzeug (90) im Bereich des Außenkegels mit Rollen (91) versehen ist, die bei Rotation des Werkzeugs (90) einen mit der innenkegelförmigen Oberfläche identischen Außenkegel beschreiben und daß Spreizmittel (95, 96, 97; 98) zum radialen Anpressen der Rollen (91) an die Oberfläche vorgesehen sind.

8. Vorrichtung zur Durchführung des Verfahrens nach Anspruch 3, dadurch gekennzeichnet, daß das Element mit einem Sinter-Reibbelag (15; 66) mit innenkegelförmiger Oberfläche versehen ist, daß das Werkzeug (50) mindestens abschnittsweise einen Außenkegel gleichen Steigungswinkels aufweist, daß das Werkzeug (50) mit seinem Außenkegel satt an der innenkegelförmigen Oberfläche anliegt und daß Mittel (53, 54, 55) zur Einstellung eines Drucks im Hohlraum (51) vorgesehen sind.

9. Vorrichtung zur Durchführung des Verfahrens nach Anspruch 4, dadurch gekennzeichnet, daß das Element mit einem Sinter-Reibbelag (69) mit außenkegelförmiger Oberfläche (70) versehen ist, daß das Werkzeug (80) mindestens abschnittsweise einen Innenkegel (81) gleichen Steigungswinkels aufweist und daß das Element und das Werkzeug (80) axial gegeneinander verschiebbar und unter Druck aneinander anpreßbar sind.

## Revendications

1. Procédé pour fabriquer des éléments de friction, notamment des éléments synchroniseurs (10, 60) pour des boîtes de transmission de véhicules à moteur, dans lequel un revêtement de friction fritté (15; 62, 66, 69) est appliqué sur une surface (13) de l'élément et est compacté par une pression (23) jusqu'à une dimension, nominale prédéterminée (24), caractérisé en ce que ladite pression est appliquée sur une surface conique du revêtement de friction (15; 62, 66, 69) au moyen d'un mouvement axial d'un outil (32, 40, 50, 80, 90) pourvu d'au moins un tronçon conique ayant le même ange de conicité que ladite surface du revêtement de friction (15; 62, 66, 69).

2. Procédé selon la revendication 1, caractérisé en ce que ladite pression est appliquée sur une surface conique intérieure du revêtement de friction (15; 66) au moyen d'un mouvement d'écartement radial d'un outil (40) pourvu d'une forme extérieure au moins partiellement conique et appliqué sur ladite surface intérieure conique.

3. Procédé selon la revendication 1, caractérisé en ce que ladite pression est appliquée sur une surface conique intérieure du revêtement de friction (15; 66) au moyen d'une expansion radiale d'un outil (50) déformable radialement et ayant une forme extérieure au moins partiellement conique.

4. Procédé selon la revendication 1, caractérisé en ce que ladite pression est appliquée sur une surface conique extérieure (70) du revêtement de friction (69) au moyen d'un mouvement axial d'application d'un outil (80) ayant une forme intérieure au moins partiellement conique.

5. Dispositif pour la mise en œuvre du procédé selon la revendication 1, caractérisé en ce que l'élément est pourvu d'un revêtement de friction fritté (15; 66) à surface conique intérieure, en ce que l'outil (32) comporte au moins un tronçon formant un cône extérieur (34) ayant le même angle de conicité, et en ce que l'élément et l'outil (32) sont montés de manière à pouvoir coulisser axialement l'un par rapport à l'autre et être pressés l'un contre l'autre.

6. Dispositif pour la mise en œuvre du procédé selon la revendication 2, caractérisé en ce que l'élément est pourvu d'un revêtement de friction fritté (15; 66) à surface conique intérieure, en ce que l'outil (40) comporte au moins sur un tronçon un cône extérieur (34) ayant le même angle de conicité, en ce que l'outil (40) est pourvu de joues de serrage (41) dans la zone du cône extérieur, en ce que l'outil (40) s'appuie par son cône extérieur contre ladite surface intérieure conique, et en ce que des moyens d'écartement (45) sont prévus pour écarter radialement les joues de serrage (41).

7. Dispositif pour la mise en œuvre du procédé selon la revendication 2, caractérisé en ce que l'élément est pourvu d'un revêtement de friction fritté (15; 66) ayant une surface conique intérieure, en ce que l'outil (90) décrit sur au moins un tronçon un cône extérieur ayant le même angle de conicité, en ce que l'outil (90) comporte, dans la zone dudit cône extérieur, des rouleaux (91) qui décrivent, par rotation de l'outil (90), un cône extérieur identique à ladite surface conique intérieure, et en ce que des moyens d'écartement (95, 96 97; 98) sont prévus pour presser radialement les rouleaux (91) sur ladite surface.

8. Dispositif pour la mise en œuvre du procédé selon la revendication 3, caractérisé en ce que l'élément est pourvu d'un revêtement de friction fritté (15; 66) à surface conique intérieure, en ce que l'outil (50) comporte au moins sur un tronçon un cône extérieur ayant le même angle de conicité, en ce que l'outil (50) s'appuie par son cône extérieur contre ladite surface conique intérieure, et en ce que des moyens (53, 54, 55) sont prévus pour l'introduction d'une pression dans une cavité (51).

9. Dispositif pour la mise en œuvre du procédé selon la revendication 4, caractérisé en ce que l'élément est pourvu d'un revêtement de friction fritté (69) ayant une surface conique extérieure (70), en ce que l'outil (80) comporte au moins un tronçon formant un cône intérieur (81) ayant le même angle de conicité, l'élément et l'outil (80) sont montés de manière à pouvoir coulisser axialement l'un par rapport à l'autre et être pressés l'un contre l'autre.

**Claims**

1. Method for manufacturing friction elements, especially synchronizing parts (10, 60) in motor vehicle transmissions, in which a sintered friction lining (15; 62, 66, 69) is applied to one surface (13) of the element and is compacted to a predetermined nominal size (24) under the action of pressure (23), characterised in that in the case of a sintered friction lining (15; 62, 66, 69) having a conical surface, the pressure is generated by the axial introduction of a tool (32, 40, 50, 80, 90) having a taper, at least in stages, with the same angle of inclination as the surface of the sintered friction lining (15; 62, 66, 69).

2. Method according to claim 1, characterised in that in the case of a sintered friction lining (15; 66) having an internally coned surface, the pressure is generated by the radial expansion of a tool (40) which is externally coned, at least in stages, and rests against the internally coned surface.

3. Method according to claim 1, characterised in that in the case of a friction lining (15; 66) having an internally coned surface, the pressure is generated by the radial extension of a radially deformable tool (50) which is externally coned, at least in stages.

4. Method according to claim 1, characterised in that in the case of a sintered friction lining (69) having an externally coned surface (70), the pressure is generated by the axial mounting of a tool (80) which is internally coned, at least in stages.

5. Device for implementing the method according to claim 1, characterised in that the element is provided with a sintered friction lining (15; 66) having an internally coned surface, that the tool (32) has an external taper (34), at least in stages, having the same angle of inclination and that the element and the tool (32) are axially slidable in relation to one another and can be pressed against one another.

6. Device for implementing the method according to claim 2, characterised in that the element is provided with a sintered friction lining (15; 66) having an internally coned surface, that the tool (40) has an external taper, at least in stages, having the same angle of inclination, that the tool (40) is provided with clamping jaws (41) in the region of the external taper, that the tool (40) fits snugly against the internally coned surface via its external taper and that expanding means (45) are provided for the radial expansion of the clamping jaws (41).

7. Device for implementing the method according to claim 2, characterised in that the element is provided with a sintered friction lining (15: 66) having an internally coned surface, that the tool (90) describes, at least in stages, an external cone having the same angle of inclination, that the tool (90), in the region of the external cone, is provided with rollers (91) which, upon rotation of the tool (90), describe an external cone identical to the internally coned surface and that expanding means (95, 96, 97; 98) are provided to press the rollers (91) radially against the surface.

8. Device for implementing the method according to claim 3, characterised in that the element is provided with a sintered friction lining (15; 66) having an internally coned surface, that the tool (50) has an external taper, at least in stages, having the same angle of inclination, that the tool (50) fits snugly against the internally coned surface via its external taper and that means (53, 54, 55) are provided for pressure adjustment in the hollow space (51).

9. Device for implementing the method according to claim 4, characterised in that the element is provided with a sintered friction lining (69) having an externally coned surface (70), that the tool (80) has an internal taper (81), at least in stages, having the same angle of inclination and that the element and the tool (80) are axially slidable in relation to one another and can be pressed against one another.

Fig.1

Fig.3

Fig.4

Fig. 5

Fig. 6

Fig. 2

Fig. 7

Fig. 8